# EUROPÄISCHE PATENTANMELDUNG

(11) **EP 1 319 550 A2**
(43) Veröffentlichungstag der Anmeldung: **18.06.2003**
(21) Anmeldenummer: 02024644.3
(22) Anmeldetag: 05.11.2002
(51) Int. Cl.: B60N 2/08

(54) **Längseinsteller für einen Fahrzeugsitz**

(30) Priorität: 17.11.2001 DE 10156643
(71) Anmelder: KEIPER GmbH & Co. KG, 67657 Kaiserslautern (DE)
(72) Erfinder: Flick, Joachim, 42499 Hückeswagen (DE); Bossmanns, Bernd, Dr., 40699 Erkrath (DE); Jähner, Falko, 42653 Solingen (DE)
(74) Vertreter: Patentanwälte Hosenthien-Held und Dr. Held

(57) **Zusammenfassung**

Bei einem Längseinsteller für einen Fahrzeugsitz, insbesondere für einen Kraftfahrzeugsitz, mit einer ersten Sitzschiene (5), einer relativ zur ersten Sitzschiene (5) in Längsrichtung verschiebbaren zweiten Sitzschiene und wenigstens einem Riegelelement (20), welches quer zur Längsrichtung beweglich an der zweiten Sitzschiene gelagert ist und zum Verriegeln des Längseinstellers mit Rasten (25) der ersten Sitzschiene (5) zusammenwirkt, wobei jede Raste (25) einen äußeren Einfallbereich (31) und einen inneren Einfallbereich (35) aufweist, ist der äußere Einfallbereich (31) auf die Bewegung des quer zur Längsrichtung einfallenden und sich in Längsrichtung bewegenden Riegelelementes (20) abgestimmt.

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Aus der EP 0 842 808 A1 ist bei einem Fahrzeugsitz ein Längseinsteller dieser Art bekannt, bei dem mehrere, gemeinsam manuell betätigbare Rastbügel mit je vier Riegelelementen auf jeder Längsseite schwenkbar an der zweiten Sitzschiene gelagert sind. Die mit den Riegelelementen zusammenwirkenden Rasten der ersten Sitzschiene weisen einen trichterförmigen, äußeren Einfallbereich, welcher das Einfallen von wenigstens einem Rastbügel sicherstellen soll, und einen inneren Einfallbereich mit parallelen Flanken auf, welcher die Verriegelung bewirken soll. Wenn der Fahrzeugsitz rasch verschoben wird, besteht die Gefahr, daß beim Loslassen der Rastbügel die Riegelelemente aufgrund der Relativbewegung zur ersten Sitzschiene nicht in die Rasten einfallen können.

Der Erfindung liegt die Aufgabe zu Grunde, einen Längseinsteller der eingangs genannten Art weiter zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, daß der äußere Einfallbereich auf die Bewegung der quer zur Längsrichtung einfallenden und sich in Längsrichtung bewegenden Riegelelementes abgestimmt ist, kann auch beim Verriegeln aus der Bewegung der zweiten Sitzschiene heraus, d.h. einem sogenannten dynamischen Verriegeln, der Längseinsteller sicher in den verriegelten Zustand übergehen. Bei dem zur Verfügung stehenden Bauraum kann damit eine optimale Einfalltiefe erreicht werden. Hierzu ist die Form, insbesondere der Verlauf, die Steigung und die Krümmung, des äußeren Einfallbereichs vorzugsweise darauf ausgelegt, daß das Riegelelement sich frei mit einer bestimmten, im Idealfall konstanten Geschwindigkeit in Längsrichtung und mit einer näherungsweise - beispielsweise über einen Federweg - linear abnehmenden Beschleunigung quer zur Längsrichtung bewegt, also der äußere Einfallsbereich die Form einer trigonometrischen Funktion annimmt. Das Riegelelement gleitet dann bei kleinerer als der bestimmten Geschwindigkeit in Längsrichtung an der Kontur der Raste entlang in diese hinein.

Die Begriffe "äußerer" und "innerer" Einfallsbereich beziehen sich auf die Bewegung des Riegelelementes quer zur Längsrichtung, also auf dessen Einfallrichtung, d.h. der äußere Einfallbereich ist in Einfallrichtung vor dem inneren Einfallbereich angeordnet. Ein in Einfallrichtung zwischen äußerem und innerem Einfallbereich gelegener Übergangsbereich mit vorzugsweise größerer Krümmung hat den Vorteil, daß die Kontur der Raste keine in die Flugbahn des Riegelelementes ragenden Bereiche aufweist. Die an den Flanken jeder Raste vorgesehenen Bereiche, sowie die daran vorzugsweise tangential anschließenden, die Rasten trennenden Plateaubereiche, sind untereinander vorzugsweise mit gleicher Steigung angeschlossen, um eine definierte und kontrollierte Bahn des Riegelelementes zu gewährleisten.

Jede Raste weist vorzugsweise zwei äußere Einfallbereiche auf, von denen in Längsrichtung einer auf der in Fahrtrichtung vorderen Seite und einer auf der in Fahrtrichtung hinteren Seite der Raste angeordnet ist. Diese beiden Einfallbereiche können beispielsweise spiegelbildlich ausgeführt sein. Da aber in und entgegen der Fahrtrichtung unterschiedliche Relativgeschwindigkeiten möglich sind, können die beiden äußeren Einfallbereiche in Längsrichtung auch unterschiedlich ausgebildet sein.

Im folgenden ist die Erfindung anhand eines in der Zeichnung dargestellten Ausführungsbeispiels näher erläutert. Es zeigen
- Fig. 1A: einen Schnitt durch einen Teilbereich des Ausführungsbeispiels im entriegelten Zustand vor dem Einfallen eines Zahnes,
- Fig. 1B: einen Schnitt entsprechend Fig. 1A beim Einfallen des Zahnes,

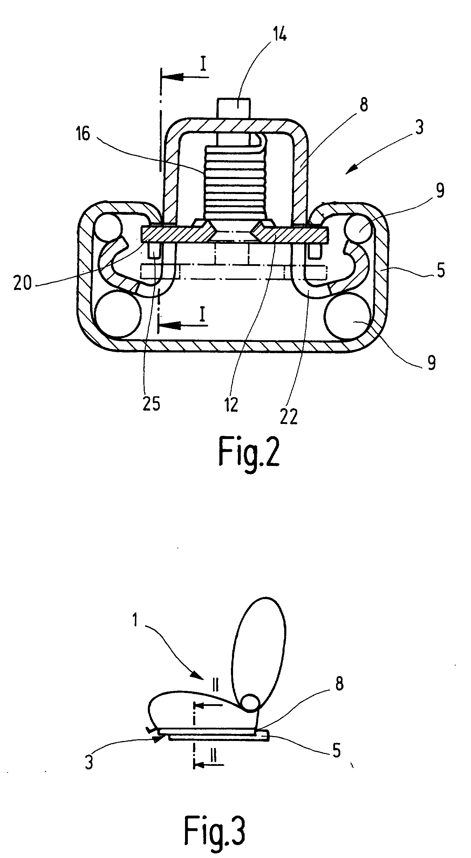

- Fig. 1C: einen Schnitt entsprechend Fig. 1A im verriegelten Zustand mit eingefallenem Zahn, wobei der Schnitt entlang der Linie I-I in Fig. 2 erfolgt,
- Fig. 1D: einen Schnitt entsprechend Fig. 1A im verriegelten Zustand mit nur teilweise eingefallenem Zahn,
- Fig. 2: einen Querschnitt durch das Ausführungsbeispiel entlang der Linie II-II in Fig. 3 im verriegelten Zustand, wobei der entriegelte Zustand gestrichelt angedeutet ist, und
- Fig. 3: eine schematische Seitenansicht eines Fahrzeugsitzes.

Eine Vorrichtung zur Längseinstellung eines Fahrzeugsitzes 1 ist im folgenden als Längseinsteller 3 bezeichnet. Die gewöhnliche Orientierung des Fahrzeugsitzes 1 in einem Kraftfahrzeug und dessen normale Fahrtrichtung definieren die nachfolgenden Richtungsangaben. Der Längseinsteller 3 weist auf jeder Seite des Fahrzeugsitzes 1 als erste Sitzschiene eine fahrzeugstrukturfeste Unterschiene 5 und als zweite Sitzschiene eine sitzstrukturfeste Oberschiene 8 auf. Die näherungsweise U-förmig profilierte, nach oben geöffnete Unterschiene 5 und die ebenfalls näherungsweise U-förmig profilierte, nach unten geöffnete Oberschiene 8 umgreifen einander wechselseitig mit ihren nach innen bzw. nach außen gebogenen Ränder, wobei die Oberschiene 8 als Laufschiene unter Zwischenlage von Kugeln 9 in der Unterschiene 5 als Führungsschiene längsverschieblich geführt ist.

Zur Verriegelung von Oberschiene 8 und Unterschiene 5 ist wenigstens eine Rastplatte 12 vorgesehen, wobei auch mehrere in Längsrichtung hintereinander angeordnete Rastplatten 12 vorhanden sein können. Die Rastplatte 12 ist im wesentlichen horizontal innerhalb eines durch die Oberschiene 8 definierten Bauraums angeordnet. Mittels eines von der Rastplatte 12 nach oben abstehenden Führungsbolzens 14 ist die Rastplatte 12 in vertikaler Richtung relativ zur Oberschiene 8 beweglich geführt, was die Einfallrichtung definiert. Eine neben dem Führungsbolzen 14 angeordnete, vorgespannte Rückstellfeder 16 ist zwischen der Rastplatte 12 und der Oberschiene 8 eingehängt und sorgt für eine nach oben gerichtete Vorspannung der Rastplatte 12.

Die Rastplatte 12 weist an ihren beiden Längsseiten als Riegelelemente jeweils vier horizontale, quer zur Schienenlängsrichtung abstehende Zähne 20 auf, welche durch Öffnungen 22 in der Oberschiene 8 greifen. Im verriegelten Zustand des Längseinstellers 3 greifen die Zähne 20 in nach unten geöffnete Rasten 25 der Unterschiene 5. Die im wesentlichen über die gesamte Länge der Unterschiene 5 vorhandenen, unter einander gleich beabstandeten Rasten 25 sind untereinander durch Plateaubereiche 27 der Unterschiene 5 getrennt, welche die horizontal verlaufende Unterkante des Randes der Unterschiene 5 definieren.

Die Kontur jeder Raste 25 setzt sich in Längsrichtung auf beiden Seiten zusammen aus jeweils einem äußeren Einfallbereich 31, der sich mit einer nachfolgend genauer beschriebenen Kurvenform vorzugsweise tangential an den benachbarten Plateaubereich 27 anschließt, einem als Radius ausgebildeten Übergangsbereich 33, der am Anschlußpunkt an den äußeren Einfallbereich 31 die gleiche Steigung wie dieser, aber eine größere Krümmung aufweist, und einem inneren Einfallbereich 35, der sich mit im wesentlichen vertikalen Flanken tangential an den Übergangsbereich 33 anschließt und über den horizontal verlaufenden Grund der Raste 25 in den inneren Einfallbereich 35 auf der anderen Seite übergeht. Die verschiedenen Bereiche auf einer Seite der Kontur der Raste 25 sind alle entweder gar nicht oder jeweils in die gleiche Richtung gekrümmt, und zwar konvex, bezogen auf das Material der Unterschiene 5, so daß keine entgegengesetzt gekrümmten Bereiche innerhalb der Kontur auf einer Seite der Raste 25 auftreten.

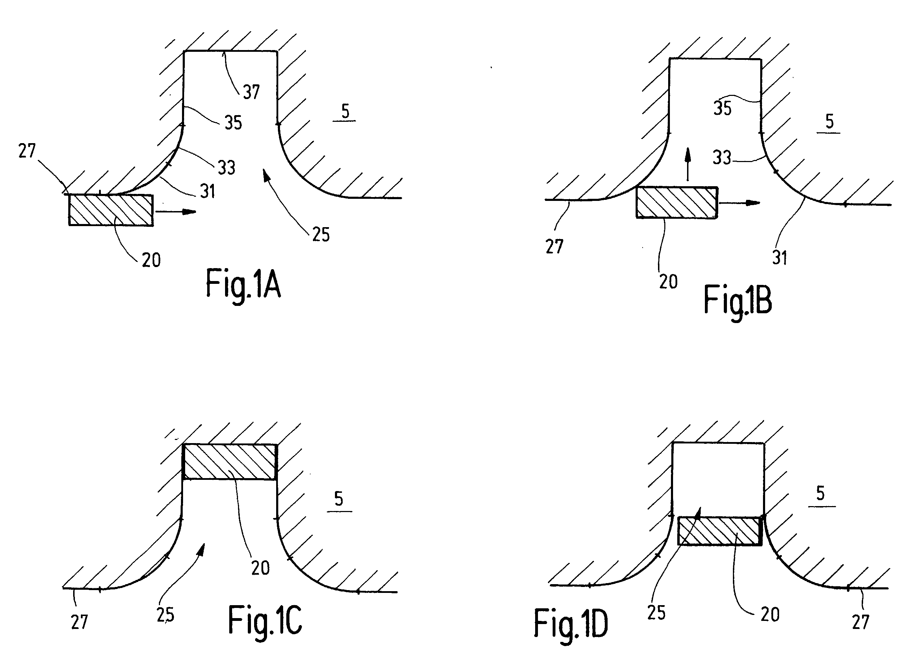

Der äußere Einfallbereich 31 ist in seiner Form, insbesondere Verlauf, Steigung und Krümmung, auf die Bewegung eines einfallenden Zahnes 20 der Rastplatte 12 bei bewegter Oberschiene 8 abgestimmt. Bei Betätigung des Längseinstellers 3 wird beim Entriegeln die Rastplatte 12 nach unten gedrückt, so daß die Zähne 20 außer Eingriff mit den Rasten 25 sind. Wenn während einer Verschiebung des Fahrzeugsitzes 1 das manuelle Bedienelement für die Entriegelung losgelassen wird, so zieht die Rückstellfeder 16 die Rastplatte 12 wieder nach oben. Im ungünstigsten Fall gelangt der Zahn 20 dann in Anlage an den Plateaubereich 27, wie es in Fig. 1A dargestellt ist. Durch die Verschiebung der Oberschiene 8, welche im Idealfall mit konstanter Verschiebeschwindigkeit erfolgt, gelangt der Zahn 20 zum äußeren Einfallbereich 31, wo die Kraft der Rückstellfeder 16 ihn nach oben beschleunigt, wie es in Fig. 1B dargestellt ist.

Mit dieser im Idealfall über den Federweg linear abnehmenden Beschleunigung quer zur Längsrichtung der Schienen, d.h. in Einfallrichtung, stellt die Bewegung des Zahnes 20 den Beginn einer Schwingung eines Federpendels dar. Bei der weiter andauernden Verschiebung der Oberschiene 8 in Längsrichtung hat die Bahn des Zahnes 20 daher die Form einer trigonometrischen Funktion. Der äußere Einfallsbereich 31 hat deshalb bei tangentialem Anschluß an den Plateaubereich 27 vorliegend eine -Cosinus-Form. Der Übergangsbereich 33 und der innere Einfallbereich 35 sind aufgrund der Anschlußbedingungen (vorzugsweise gleiche Steigung an den Anschlußpunkten und größere Krümmung im Übergangsbereich 33) außerhalb der Flugbahn des Zahnes 20 angeordnet.

Ist die tatsächliche Verschiebegeschwindigkeit der Oberschiene 8 kleiner als die für die Auslegung des äußeren Einfallbereichs 31 angenommene, so gleitet der Zahn 20 am äußeren Einfallbereich 31, am Übergangsbereich 33 und am inneren Einfallbereich 35 entlang zum Grund 37 der Raste 25, wie es in Fig. 1C dargestellt ist. Ist die tatsächliche Verschiebegeschwindigkeit der Oberschiene 8 größer als die für die Auslegung des äußeren Einfallbereichs 31 angenommene, so löst sich der Zahn 20 vom äußeren Einfallbereich 31 und gelangt auf der gegenüberliegenden Seite der Raste 25 in Anlage an deren Kontur, beispielsweise an den gegenüberliegenden äußeren Einfallbereich 31, wie es in Fig. 1D dargestellt ist.

### Bezugszeichenliste

- 1: Fahrzeugsitz
- 3: Längseinsteller
- 5: Unterschiene, erste Sitzschiene
- 8: Oberschiene, zweite Sitzschiene
- 9: Kugel
- 12: Rastplatte
- 14: Führungsbolzen
- 16: Rückstellfeder
- 20: Zahn
- 22: Öffnung
- 25: Raste
- 27: Plateaubereich
- 31: äußerer Einfallbereich
- 33: Übergangsbereich
- 35: innerer Einfallbereich
- 37: Grund

## Patentansprüche

1. Längseinsteller für einen Fahrzeugsitz, insbesondere für einen Kraftfahrzeugsitz, mit einer ersten Sitzschiene (5), einer relativ zur ersten Sitzschiene (5) in Längsrichtung verschiebbaren zweiten Sitzschiene (8) und wenigstens einem Riegelelement (20), welches quer zur Längsrichtung beweglich an der zweiten Sitzschiene (8) gelagert ist und zum Verriegeln des Längseinstellers (3) mit Rasten (25) der ersten Sitzschiene (5) zusammenwirkt, wobei jede Raste (25) einen äußeren Einfallbereich (31) und einen inneren Einfallbereich (35) aufweist, **dadurch gekennzeichnet, daß** der äußere Einfallbereich (31) auf die Bewegung des quer zur Längsrichtung einfallenden und sich in Längsrichtung bewegenden Riegelelementes (20) abgestimmt ist.

2. Längseinsteller nach Anspruch 1, **dadurch gekennzeichnet, daß** der äußere Einfallbereich (31) in seiner Form auf eine beschleunigte Bewegung des Riegelelementes (20) quer zur Längsrichtung und eine Bewegung mit einer bestimmten Geschwindigkeit in Längsrichtung abgestimmt ist.

3. Längseinsteller nach Anspruch 2, **dadurch gekennzeichnet, daß** der äußere Einfallbereich (31) die Form einer trigonometrischen Funktion aufweist.

4. Längseinsteller nach einem der Ansprüche 1 bis 3, **dadurch gekennzeichnet, daß** zwischen dem äußeren Einfallbereich (31) und dem inneren Einfallbereich (35) ein Übergangsbereich (33) vorgesehen ist, welcher als Radius ausgebildet ist.

5. Längseinsteller nach Anspruch 4, **dadurch gekennzeichnet, daß** der Übergangsbereich (33) eine größere Krümmung als der äußere Einfallbereich (31) am Anschluß zum Übergangsbereich (33) aufweist.

6. Längseinsteller nach einem der Ansprüche 1 bis 5, **dadurch gekennzeichnet, daß** die an den Flanken jeder Raste (25) vorgesehenen Bereiche (31, 33, 35) untereinander mit gleicher Steigung angeschlossen sind.

7. Längseinsteller nach einem der Ansprüche 1 bis 6, **dadurch gekennzeichnet, daß** die Rasten (25) untereinander durch Plateaubereiche (27) der ersten Sitzschiene (5) getrennt sind, wobei sich die äußeren Einfallbereiche (31) tangential an die Plateaubereiche (27) anschließen.

8. Längseinsteller nach einem der Ansprüche 1 bis 7, **dadurch gekennzeichnet, daß** jede Raste (25) zwei äußere Einfallbereiche (31) aufweist, die in Längsrichtung unterschiedlich ausgebildet sind.

9. Fahrzeugsitz, insbesondere Kraftfahrzeugsitz, mit einem Längseinsteller (3) nach einem der Ansprüche 1 bis 8.
